# EUROPEAN PATENT SPECIFICATION

(11) **EP 3 232 854 B1**
(45) Date of publication and mention of the grant of the patent: **05.12.2018**
(21) Application number: 15820273.9
(22) Date of filing: 07.12.2015
(51) Int. Cl.: A45D 20/12

(54) **HAIR DRYER PROVIDED WITH AN ELECTRIC MOTOR**
HAARTROCKNER MIT EINEM ELEKTRISCHEN MOTOR
SÈCHE-CHEVEUX ÉQUIPÉ D'UN MOTEUR ELECTRIQUE

(30) Priority: 16.12.2014 IT RM20140722
(43) Date of publication of application: 25.10.2017
(73) Proprietor: Soresina, Claudio, 6877 Coldrerio (CH); Soresina, Flavio, 6850 Mendrisio (CH)
(72) Inventor: Soresina, Claudio, 6877 Coldrerio (CH); Soresina, Flavio, 6850 Mendrisio (CH)
(74) Representative: Fabiano, Piero
(86) International application number: PCT/IB2015/059398
(87) International publication number: WO 2016/097922

(56) References cited:
- EP-A1- 1 103 202
- DE-A1- 2 742 615
- GB-A- 2 227 655
- JP-A- 2003 086 330
- US-A- 3 439 204
- US-A- 4 658 116
- US-A- 4 683 369

## Description

The present invention concerns a hair dryer and, more particularly, a hair dryer provided with an electric motor, preferably of brushless type.

### KNOWN ART

The hair dryers are devices used to dry hair both in beauty shops or hairdressers and in domestic use (see document DE2742615).

Usually, known hair dryers comprise a body having a "gun" shape composed of an upper element and a grip portion adapted to be grasped by a user.

The upper element, substantially cylindrical or truncated-conical, extends along an axis and has an air inlet at one end and, at the opposite end, an air outlet.

Inside the upper element there are, usually, an electric motor and a fan, the latter being operated by the afore said motor and able to generate an air flow passing through the upper element and exiting from the front opening.

Inside the upper element there is, at a predetermined distance from the motor and the fan, one or more electric resistances to heat the air flow the fan generated.

Generally, inside the grip portion there is a little control unit, such as an electronic printed circuit, which allows to control the electric motor and, consequently, the fan and the electric resistance.

The electric motor and the resistance, as well as the electronic printed circuit, are electrically powered and, for this purpose, a power cord connected to the afore said grip portion connects the afore said elements to the electric network.

Recently, thanks to commercial boost due to demand for products having high energy efficiency, the use of electric motors of brushless type is becoming popular. The first great benefit relating to the use of these motors is the expected lifetime of the motor itself with respect to conventional electric motors. Moreover, in brushless motors the brush absence eliminates also the main source of electromagnetic noise present in the other electric motors. Another great benefit of this kind of motors relates to the elimination of air pollution produced by the brush consumption and the consequent introduction of powders in the air environment surrounding the motor.

The bulk of this kind of motors is limited with respect to the power they can supply but, most of all, to the torque these motors can provide. In terms of efficiency, brushless motors always operate in optimal efficiency conditions and, since they have not to generate a rotor magnetic field, they have higher efficiency.

Furthermore, brushless motors have low noisiness.

Brushless motors are driven by an electronic control circuit such as an electronic printed circuit.

The Applicant observed that placing the printed circuit in a case or box outside of the hair dryer, in particular outside of the hair dryer body, is known so that the electronic printed circuit is not subjected to the heat generated by the brushless motor.

The Applicant noticed that, in this way, the device formed by the hair dryer and the outer box connected one another through electric cables are inconvenient, bulky and uncomfortable to handle.

Furthermore, the Applicant observed that brushless motors, when started up by a conventional switch, always start at the highest speed.

This causes drawbacks in terms of electric current absorption and high restrictions due to the very low possibility of adjusting the speed and temperature of the air flow coming out from the air dryer.

Therefore the Applicant found the need of solving the afore stated problems by providing a hair dryer equipped with an electric motor, preferably an electric motor of brushless type not having overheating drawbacks of the controlling printed circuit and, at the same time, not being inconvenient, bulky and unconformable to handle, as the hair dryers provided with an outer case for the control printed circuit. Furthermore, the Applicant found the need of providing a hair dryer with an electric motor, preferably of brushless type, not switching on always at the maximum speed, thereby not generating the above mentioned drawbacks relating the electric current absorption and air flow adjustment.

### SUMMARY OF THE INVENTION

Therefore, a first aspect of the invention relates to a hair dryer comprising a body provided with at least one upper element and a grip portion adapted to be grasped by a user and operatively connected to said at least one upper element; said upper element extending along an axis (X-X) and having, at one end thereof, an air inlet and, at the opposite end, an air outlet; said upper element comprising, in its inside:
- an electric motor;
- a fan, operated by said electric motor to produce an air flow passing through the upper element and coming out from the front opening;
- electric heating means to heat the air flow produced by the fan; said electric heating means being arranged at a predetermined distance from said electric motor and the fan;
- a first electronic control printed circuit allowing the electric motor and said fan to be driven;
- at least one thermal insulating shield interposed between said first electronic control printed circuit and said electric heating means to protect said first electronic control printed circuit against the heat sent out by said electric heating means, the electronic control printed circuit, the electric heating means and said at least one thermal insulating shield being aligned with respect to the extension axis.

In the scope of the present invention with "axial direction" or "axially" it is meant a direction parallel, or anyway just a little sloped, with respect to the X-X axis.

Always in the scope of the present invention with "proximal", "proximally", it is referred to parts or elements arranged in a direction parallel to the X-X axis at the grip portion of the hair dryer, vice versa with "distal", "distally", it is referred to parts or elements arranged in a direction parallel to the X-X axis and axially apart from the grip portion of the hair dryer.

Lastly, with "radial direction", "radially", it is meant a direction substantially orthogonal to the X-X axis.

In the above said aspect, the present invention can have at least one of the preferred characteristics hereinafter described.

Preferably, the hair dryer extends so as to cover at least 70% of the surface of the first electronic control printed circuit.

Advantageously, the electric motor is of brushless type.

Advantageously, also the electric motor and the fan are aligned with respect to the extension axis. In this way, the first electronic control printed circuit, the electric heating means, the thermal insulating shield and the fan are aligned with respect to the extension axis.

Preferably, the thermal insulating shield comprises a substantially dish-shaped portion extending radially around the extension axis (X-X) of the upper element. Conveniently, the thermal insulating shield comprises fastening means for a removable fastening to said motor.

Preferably, the thermal insulating shield comprises an annular portion concentric to said extension axis (X-X) in order to at least partially envelop the electronic components of the first electronic control printed circuit.

Advantageously, the thermal insulating shield is made of a polyamide-based thermoplastic material.

Preferably, the thermal insulating shield is made of a polyamide-based thermoplastic material reinforced with glass fibers.

Conveniently, the thermal insulating shield comprises a tapered portion in the direction of the fan in order to direct the air flow radially outwards.

Furthermore the Applicant found that, in order to not have inconveniences, the power supply of the electric motor of the hair dryer has to be separated from that one of the electric heating means.

Therefore, the power supply of the electric motor is preferably separated from the power supply of the electric heating means.

Conveniently, the hair dryer comprises a second printed circuit that allows the electric heating means to be controlled. The second electronic printed circuit also allows controlling the motor operation.

Advantageously, the hair comprises a first double-pole switch comprising two interrupters, wherein a first interrupter has an input supplied by the power source of the mains and an output supplying a first supply input of said electric motor, said double-pole switch further comprising a configuration in which at least one of the interrupters is closed.

Advantageously, the first double-pole switch comprises a second interrupter having an input and an output respectively connected to a first and a second controlling terminal of the electric motor.

Preferably, the first double-pole switch can be configured in a first or second or third position wherein, respectively:
- in said first position, said first interrupter is closed while the second interrupter is open;
- in said second position, said first interrupter is closed and the second interrupter is closed;
- in said third position, said first interrupter is open while the second interrupter is closed;
and wherein the switching between said first and third position happens by going through said second position.

Conveniently, the electric heating means are connected to a second double-pole switch having three positions, suitable to operate the electric heating means in sequence and therefore to detect a first configuration in which said air flow is not heated, a second configuration in which said air flow is heated by only one of said electric heating means and a third configuration in which said air flow is heated by two of said electric heating means.

Advantageously, the second double-pole switch has a first and a second interrupter that switch simultaneously, and it can be configured in a first, a second and a third configuration in which, respectively:
- in said first position, said first interrupter is open and the second interrupter is open;
- in said second position, said first interrupter is closed and the second interrupter is open;
- in said third position, said first interrupter is closed while the second interrupter is closed;
wherein the switching between said first and third position happens compulsorily by going through said second position.

### BRIEF DESCRIPTION OF THE DRAWINGS

Further characteristics and advantages of the invention will be more evident from the detailed description of some preferred embodiments, but not exclusive, of a hair dryer according to the present invention.

Such a description will be hereinafter explained referring to the attached drawings, provided for purposes of illustrations only, and thereby not limitative, wherein:
- figure 1 is a perspective schematic view of a hair dryer according to the present invention;
- figure 2 is an exploded schematic view of some inner elements of the hair dryer according to the present invention;
- figure 3 is an enlarged sectional side view of a first embodiment of the thermal shield according to the present invention;
- figure 4 is a top view of the thermal shield shown in figure 3;
- figure 5 depicts a circuitry of the hair dryer object of the present invention; and
- figures 6a-6c respectively depict a first, a second and a third configuration of an innovative double-pole switch comprised in the hair dryer object of the present invention;
- figures 6d-6f respectively depict a first, a second and a third configuration of a conventional double-pole switch.

### DETAILED DESCRIPTION OF SOME EMBODIMENTS OF THE INVENTION

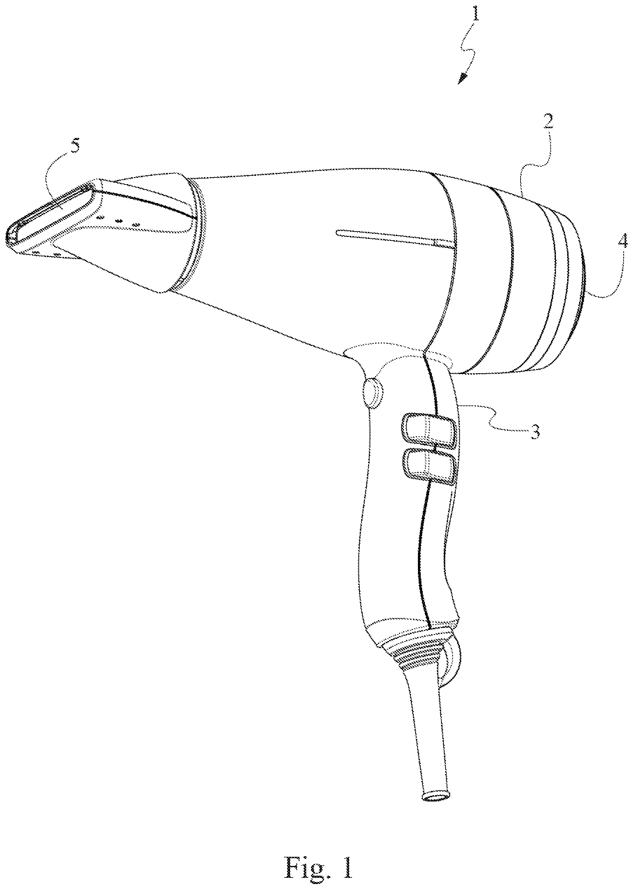

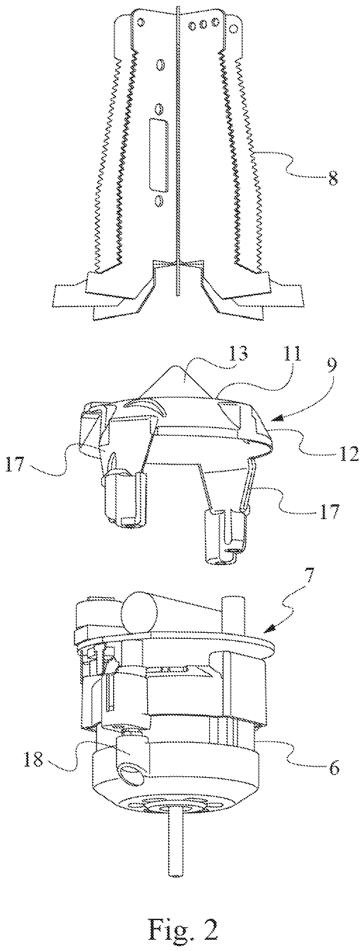

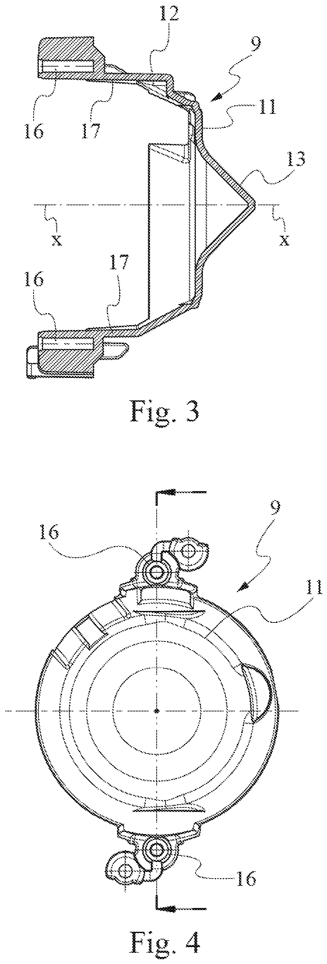

Referring to figures 1-3, a hair dryer according to the present invention is denoted with the numeral reference 1.

The hair dryer shown in figure 1 has a body provided with at least one upper element 2 and a grip portion 3 adapted to be grasped by a user.

The upper element 2 extends along an axis X-X and has an air inlet 4 at one of its end and, at the opposite end, an air outlet 5.

The upper element 2 comprises, in its inside: an electric motor 6; a fan, not directly shown in figure, operated by the electric motor 6 to produce an air flow passing through the upper element 2 and coming out from the front opening 5.

In a conventional way, electric heating means are further present, such as an electric resistance 8 comprising two windings 181, 182 to heat the air flow the fan generates. The electric resistance 8 is arranged at a predetermined distance from the electric motor 6 and the fan.

In particular, in case of an electric motor 6 of brushless type, in the upper element 2 there is a control printed circuit allowing the electric motor 6 and the fan to be driven.

In particular, in case of an electric motor 6 of the brushless type, there is a first electronic control printed circuit 7 comprising a series of electronic elements such as a microcontroller driving the transistors and driving the current switching.

In order to protect the first electronic control printed circuit 7 from high temperatures generated by the electric resistance 8 while the hair dryer is operating, according an important aspect of the present invention, at least one thermal insulating shield 9 is provided as interposed between the first electronic control printed circuit 7 and the electric heating means. In particular, the thermal insulating shield 9 is interposed between the first electronic control printed circuit 7 and the electric resistance 8.

In the embodiment shown in figures 1-4, the electronic control printed circuit 7, the electric heating means 8 and the thermal insulating shield 9 are aligned with respect to the extension axis X-X and the thermal insulating shield 9 radially extends orthogonally to the axis X-X so as to be arranged between the first electronic control printed circuit 7 and the electric resistance 8.

Preferably, also the electric motor 6 and the fan are aligned with respect to the extension axis X-X, in this way the electric motor 6, the electronic control printed circuit 7, the electric heating means 8, the thermal insulating shield 9 and the fan are aligned with respect to the extension axis X-X.

The thermal shield 9 is arranged at an axial distance with respect to the electric resistance 8, preferably such a distance is comprised in the range from 3 mm to 30 mm.

The thermal shield 9 extends so as to cover at least 70% of the surface of the control printed circuit 7.

Preferably, the thermal shield 9 extends so as to cover at least 90% of the surface of the first electronic control printed circuit 7.

In the embodiment shown in figures 1-4, the thermal insulating shield 9 comprises a substantially dish-shaped portion 11 extending radially around the extension axis X-X of the upper element 2. In the embodiment shown in figures 1-4, when the device is assembled, the dish-shaped portion 11 is substantially arranged orthogonally to the extension axis X-X, the dish-shaped portion 11 comprises a tapered portion 13 arranged radially in the center and tapered in the direction of the electric resistance 8.

The tapered portion 13 is tapered in the direction of the electric resistance 8 and, substantially, in the direction of the fan to direct radially outwards the hot air flow coming from the fan, i.e. away from the axis X-X.

An annular portion 12 concentric to said extension axis X-X of the thermal insulating shield is radially arranged outside of the dish-shaped portion 11 in order to at least partially envelop the electronic components of the first electronic control printed circuit 7.

Preferably, the thermal insulating shield 9 comprises fastening means 14 for a removable fastening to the motor 6.

In the embodiment shown in figures 1-4, the fastening means 14 for a removable fastening to the motor 6 are denoted by two threaded seats 16 placed on two tines 17 extending parallel to the axis X-X and cooperating with threaded seats 18 and apposite fastening screws not shown in figure.

The threaded seats 18 are constrained to the motor 6 through a cover 19 and are arranged diametrically opposite to the axis of the motor 6.

The threaded seats 18 are positioned in a corresponding place with respect to the threaded seats 17 of the thermal insulating shield 9 so that when the device is assembled, the fastening screws pass through the threaded seats 17 and the threaded seats 18 thereby constraining the thermal insulating shield 9 together with the electric motor 6.

The fastening means 14 for a removable fastening to the motor 6 are shaped to constrain the thermal insulating shield 9 to the motor 6 so that at least one opening or slot remains between the thermal insulating shield 9 and the motor 6 in order to have two air passages for the first control printed circuit 7 for an improved cooling. Alternatively, other fastening means 14 for a removable fastening to the motor 6 can be provided, without departing from the protection scope of the present invention.

Preferably, in order to obtain the desired insulation effect, the thermal insulating shield 9 is made of a polyamide-based thermoplastic material.

Still more preferably, the thermal insulating shield 9 is made of a polyamide-based thermoplastic material reinforced with glass fiber.

The thermal insulating shield 9 has a minimum thickness of 1 mm.

Preferably, the thermal insulating shield 9 has a minimum thickness comprised from 1 mm to 3 mm, limits included.

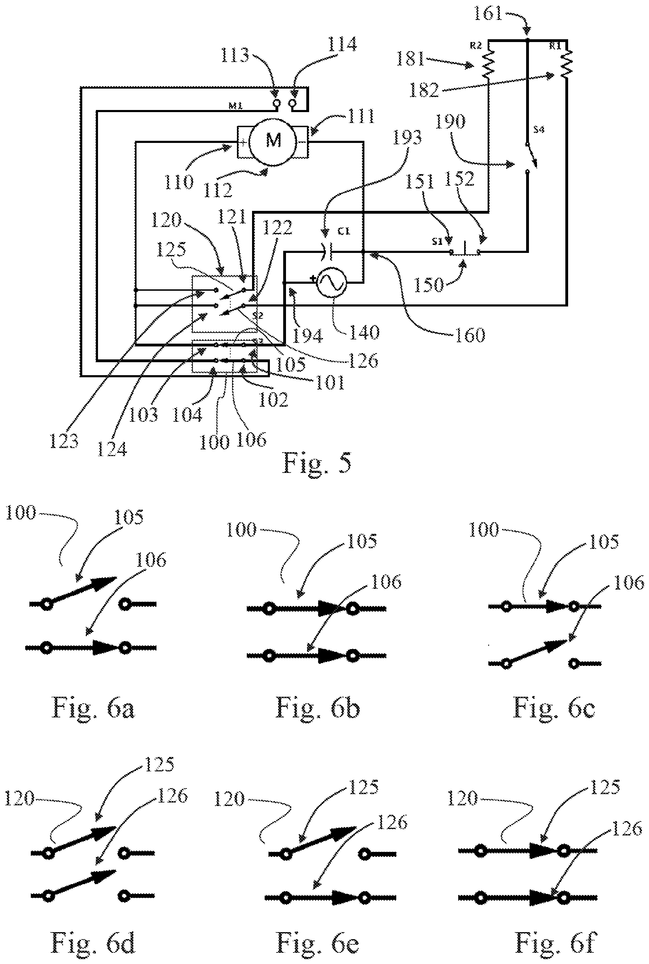

In figure 5 a first embodiment is shown of a second electric circuit of the hair dryer object of the present invention.

As shown, a second electric circuit 90 comprises a first double-pole switch 100 having three positions, provided with a first input 101 and a second input 102 and a first output 103 and a second output 104. Each input and output combination is driven by a first and a second interrupter 105, 106, in which each of them is controlled by the position adopted by a controlling rocker; the first and the second interrupters switch simultaneously.

In detail, said rocker may adopt a first, second or third position, and every switching between a position and the other one, it causes the opening or closing of at least one of the first and second switches 105, 106.

The second position adopted by said rocker is a central position between said first position and said third position: therefore, it can switch between the first and the second position, or between the second and the third position, but it cannot directly switch between the first and the third position without going through the second one.

As depicted in figure 6a, in said first position, said first interrupter 105 is closed, while the second interrupter 106 is open.

As depicted in figure 6b in said second position, both the interrupters 105, 106 are closed.

As depicted in figure 6c, in said third position, said first interrupter 105 is open, while the second interrupter 106 is closed.

When installed in the hair dryer object of the present invention, the first double-pole switch 100 is installed so that the first interrupter 105 has in input 101 supplied by the mains voltage and supplies, through its corresponding output 103, a first input terminal 110 supplying the electric motor 112 through which the fan for producing the air flow is rotated.

As previously mentioned, preferably but not exclusively, the electric motor 6 object of the present invention is a brushless motor supplied by direct current.

A second terminal 111 supplying the electric motor 112 object of the present invention is further supplied by the source 140 of mains voltage through the connection to a node 160 on which an usually closed interrupter 150 is connected, which is preferably of astable and push-button type. Such a push-button is used to provide the so-called "cool shot", by shorting the heating resistors.

A capacitor 193, preferably of non-polarized type, is arranged between the two terminals coming from the mains voltage 140.

Said interrupter has a first terminal 151 connected to a node 160 to which both the mains supply 140 and the second terminal 111 supplying the electric motor 112 are connected, and further has a second terminal 152 to which a couple of electric resistances 181, 182 (or windings) are connected for heating air. Between the second terminal and the heating electric resistances 181, 182 there is a thermostatic switch 190 interrupting the power supply to said electric resistance if the temperature exceeds a predefined threshold value.

The two heating electric resistances 181, 182 are connected in parallel next to their reciprocal first terminal from a node 161 on which the terminal of the thermostatic switch 190 comes, which is opposed to that one from which the power supply comes.

The two heating electric resistances 181, 182, at a second terminal thereof, are connected to a second double-pole switch 120 having three positions. The second switch 120 is connected to a couple of controlling terminals 113, 114 of the electric motor.

Said second double-pole switch 120 has a first input 121 and a second input 122 and a first output 123 and a second output 124. Each input and output combination is driven by a respective first and a second interrupter 125, 126, in which each of them is controlled by the position adopted by a controlling rocker and switches simultaneously to the other one.

In detail, said rocker may adopt a first, second or third position, and every switching between a position and the other one, it causes the opening or closing of at least one of the said first and second switches 125, 126.

The second position adopted by said rocker is a central position between said first position and said third position: therefore, it can switch between the first and the second position, or between the second and the third position, but it cannot directly switch between the first and the third position without going through the second one.

As depicted in figure 6d, in said first position, said first interrupter 125 and said second interrupter 126 are open.

As depicted in figure 6e, in said second position, said first interrupter 125 is open, while the second interrupter 126 is closed.

As depicted in figure 6f, in said third position, the first interrupter 125 and the second interrupter 126 are closed.

The second double-pole switch 120 is used to control the blown air heating used by the hair dryer object of the present invention.

Every second terminal of every heating electric resistance is respectively connected to the respective first input 121, 122 of the first and second interrupter 125, 126 of the second double-pole switch 120, which therefore activates them in sequence among a first configuration, in which the air flow is not heated, a second configuration in which the air flow is heated by only one of the two resistances, and a third configuration in which the air flow is heated by both resistances.

The outputs of the second double-pole switch are both connected to the first terminal supplying the electric motor 112.

Advantageously, through the present configuration, the electric resistances are supplied by a different and separated connection with respect to the power supply of the electric motor, thereby ensuring a lower emission of electromagnetic perturbations.

In addition, the electric motor can be supplied more progressively, thereby reducing the absorption of starting current.

The present invention has been described referring to some embodiments. To the embodiments herein represented in detail various modifications can be made, anyway remaining in the protection scope of the invention, defined by the following claims.

## Claims

1. Hair dryer (1) comprising a body provided with at least one upper element and a grip portion adapted to be grasped by a user and operatively connected to said at least one upper element (2); said upper element (2) extending along an axis (X-X) and having, at one end thereof, an air inlet (4) and, at the opposite end, an air outlet (5); said upper element (2) comprising, in its inside:
- an electric motor (6);
- a fan, operated by said electric motor (6) to produce an air flow passing through the upper element (2) and coming out from the front opening;
- electric heating means (8, 181, 182) to heat the air flow produced by the fan; said electric heating means (8, 181, 182) being arranged at a predetermined distance from said electric motor (6) and the fan;
- a first electronic control printed circuit (7) allowing the electric motor (6) and said fan to be driven;
- at least one thermal insulating shield (9) interposed between said first electronic control printed circuit (7) and said electric heating means (8, 181, 182) to protect said electronic control printed circuit (7) against the heat sent out by said electric heating means (8, 181, 182);
- said electronic control printed circuit (7), said electric heating means (8, 181, 182) and said at least one thermal insulating shield (9) being aligned with respect to the extension axis (X-X).

2. Hair dryer (1) according to claim 1, **characterized in that** said thermal insulating shield (9) extends so as to cover at least 70% of the surface of the first electronic control printed circuit (7).

3. Hair dryer (1) according to claim 2, **characterized in that** said electric motor (6) is a brushless motor.

4. Hair dryer (1) according to claim 1, **characterized in that** said electric motor (6) and said fan are aligned with respect to the extension axis (X-X).

5. Hair dryer (1) according to claim 1, **characterized in that** said thermal insulating shield (9) comprises a substantially dish-shaped portion (11) extending radially around the extension axis (X-X) of said upper element (2).

6. Hair dryer (1) according to claim 1, **characterized in that** said thermal insulating shield (9) comprises fastening means for a removable fastening to said electric motor (6).

7. Hair dryer (1) according to claim 1, **characterized in that** said thermal insulating shield (9) comprises an annular portion (12) concentric to said extension axis (X-X) in order to at least partially envelop the electronic components of said first electronic control printed circuit (7).

8. Hair dryer (1) according to claim 1, **characterized in that** said thermal insulating shield (9) is made of a polyamide-based thermoplastic material.

9. Hair dryer (1) according to claim 1, **characterized in that** said thermal insulating shield (9) is made of a polyamide-based thermoplastic material reinforced with glass fillers.

10. Hair dryer (1) according to claim 1, **characterized in that** said thermal insulating shield (9) comprises a tapered portion (13) in the direction of said fan in order to direct the air flow radially outwards.

11. Hair dryer (1) according to any one of the preceding claims 1 to 10, comprising a second printed circuit that allows said electric heating means (8, 181, 182) to be controlled.

12. Hair dryer (1) according to any one of the preceding claims 1 to 11, wherein the supply of said electric motor (6) is separated from the supply of said electric heating means (181, 182).

13. Hair dryer according to claim 10, wherein the second electronic printed circuit comprises a first double-pole switch (100) comprising two interrupters (105, 106), wherein a first interrupter (105) has an input (101) supplied by the power source (140) of the mains and an output (103) supplying a first supply input (110) of said electric motor (6), and wherein said double-pole switch (100) always comprises a configuration in which at least one of said interrupters (105, 106) is closed.

14. Hair dryer (1) according to claim 13, wherein said first double-pole switch (100) comprises a second interrupter (106) having an input (102) and an output (104) respectively connected to a first and a second controlling terminal (113, 114) of said electric motor (6).

15. Hair dryer according to claim 13 or 14, wherein said first double-pole switch (100) can be configured in a first or second or third position wherein, respectively:
- in said first position, said first interrupter (105) is closed while the second interrupter (106) is open;
- in said second position, said first interrupter (105) is closed and the second interrupter (106) is closed;
- in said third position, said first interrupter (105) is open while the second interrupter (106) is closed; and
- wherein the switching between said first and third position happens by going through said second position.

16. Hair dryer according to claim 11, wherein said electric heating means (181, 182) are connected to a second double-pole switch (120) having three positions, suitable to operate the electric heating means (181, 182) in sequence and therefore to detect a first configuration in which said air flow is not heated, a second configuration in which said air flow is heated by only one of said electric heating means (181, 182) and a third configuration in which said air flow is heated by two of said electric heating means (181, 182).

17. Hair dryer according to claim 15, wherein said second double-pole switch (120) has a first and a second interrupter (125, 156) that switch simultaneously, and it can be configured in a first, a second and a third configuration in which, respectively:
- in said first position, said first interrupter (125) is open and the second interrupter (126) is closed;
- in said second position, said first interrupter (125) is closed and the second interrupter (106) is open;
- in said third position, said first interrupter (125) is closed while the second interrupter (106) is closed;
wherein the switching between said first and third position happens compulsorily by going through said second position.

## Patentansprüche

1. Haartrockner (1) umfassend einen Körper, der mit mindestens einem oberen Element und einem Griffabschnitt versehen ist, welcher dazu eingerichtet ist, durch einem Benutzer ergriffen zu werden und welcher mit dem mindestens einen oberen Element (2) wirkverbunden ist; wobei sich das obere Element (2) entlang einer Achse (X-X) erstreckt und an einem Ende einen Lufteinlass (4) und am entgegengesetzten Ende einen Luftauslass (5) aufweist; wobei das obere Element (2) in seinem Inneren umfasst:
- einen Elektromotor (6);
- ein Gebläse, das von dem Elektromotor (6) zur Erzeugung eines Luftstroms betrieben wird, welcher durch das obere Element (2) strömt und aus der vorderen Öffnung austritt;
- elektrische Heizmittel (8, 181, 182) zum Erwärmen des vom Gebläse erzeugten Luftstroms; wobei die elektrischen Heizmittel (8, 181, 182) zum Elektromotor (6) und zum Gebläse in einem vorbestimmten Abstand angeordnet sind
- eine erste gedruckte, elektronische Steuerschaltung (7), die das Antreiben des Elektromotors (6) und des Gebläses ermöglicht;
- mindestens eine Wärmeisolationsabschirmung (9), die zwischen der ersten gedruckten, elektronischen Steuerschaltung (7) und den elektrischen Heizmitteln (8, 181, 182) angeordnet ist, um die gedruckte, elektronische Steuerschaltung (7) gegenüber der von den elektrischen Heizmitteln (8, 181, 182) abgegebenen Wärme zu schützen;
- wobei die gedruckte, elektronische Steuerschaltung (7), die elektrischen Heizmittel (8, 181, 182) und die mindestens eine Wärmeisolationsabschirmung (9) in Bezug auf die Erstreckungsachse (X-X) ausgerichtet sind.

2. Haartrockner (1) gemäß Anspruch 1, **dadurch gekennzeichnet, dass** sich die Wärmeisolationsabschirmung (9) so erstreckt, dass sie mindestens 70% der Oberfläche der ersten gedruckten, elektronischen Steuerschaltung (7) abdeckt.

3. Haartrockner (1) gemäß Anspruch 2, **dadurch gekennzeichnet, dass** der Elektromotor (6) ein bürstenloser Motor ist.

4. Haartrockner (1) gemäß Anspruch 1, **dadurch gekennzeichnet, dass** der Elektromotor (6) und das Gebläse in Bezug auf die Erstreckungsachse (X-X) ausgerichtet sind.

5. Haartrockner (1) gemäß Anspruch 1, **dadurch gekennzeichnet, dass** die Wärmeisolationsabschirmung (9) einen im Wesentlichen schalenförmigen Abschnitt (11) umfasst, der sich radial um die Erstreckungsachse (X-X) des oberen Elements (2) erstreckt.

6. Haartrockner (1) gemäß Anspruch 1, **dadurch gekennzeichnet, dass** die Wärmeisolationsabschirmung (9) Befestigungsmittel für eine lösbare Befestigung am Elektromotor (6) umfasst.

7. Haartrockner (1) gemäß Anspruch 1, **dadurch gekennzeichnet, dass** die Wärmeisolationsabschirmung (9) einen zur Erstreckungsachse (X-X) konzentrischen, ringförmigen Abschnitt (12) umfasst, um die elektronischen Komponenten der ersten gedruckten, elektronische Steuerschaltung (7) zumindest teilweise zu umhüllen.

8. Haartrockner (1) gemäß Anspruch 1, **dadurch gekennzeichnet, dass** die Wärmeisolationsabschirmung (9) aus einem Polyamid-basierten, thermoplastischen Material besteht.

9. Haartrockner (1) gemäß Anspruch 1, **dadurch gekennzeichnet, dass** die Wärmeisolationsabschirmung (9) aus einem Polyamid-basierten, thermoplastischen Material besteht, welches mit Glasfüllstoffen verstärkt ist.

10. Haartrockner (1) gemäß Anspruch 1, **dadurch gekennzeichnet, dass** die Wärmeisolationsabschirmung (9) in Richtung des Gebläses einen konischen Abschnitt (13) umfasst, um die Luftströmung radial nach außen auszurichten.

11. Haartrockner (1) gemäß einem der vorhergehenden Ansprüche 1 bis 10, umfassend eine zweite gedruckte Schaltung, welche die Steuerung der elektrischen Heizmittel (8, 181, 182) ermöglicht.

12. Haartrockner (1) gemäß einem der vorhergehenden Ansprüche 1 bis 11, wobei die Versorgung des Elektromotors (6) von der Versorgung der elektrischen Heizmittel (181, 182) getrennt ist.

13. Haartrockner gemäß Anspruch 10, wobei die zweite gedruckte, elektronische Schaltung einen ersten, zwei Stromunterbrecher (105, 106) umfassenden, zweipoligen Schalter (100) umfasst, wobei ein erster Stromunterbrecher (105) einen Eingang (101) aufweist, der von der Stromquelle (140) des Stromnetzes versorgt wird, und ein Ausgang (103), der einen ersten Versorgungseingang (110) des Elektromotors (6) versorgt, und wobei der zweipolige Schalter (100) immer eine Konfiguration umfasst, in der mindestens einer der Stromunterbrecher (105, 106) geschlossen ist.

14. Haartrockner (1) gemäß Anspruch 13, wobei der erste zweipolige Schalter (100) einen zweiten Stromunterbrecher (106) umfasst, der einen Eingang (102) und einen Ausgang (104) aufweist, welcher entsprechend mit einem ersten und einem zweiten Steuerungsanschluss (113, 114) des Elektromotors (6) verbunden ist.

15. Haartrockner gemäß Anspruch 13 oder 14, wobei der erste zweipolige Schalter (100) in einer ersten, zweiten oder dritten Stellung eingestellt sein kann, wobei:
- in der ersten Stellung der erste Stromunterbrecher (105) geschlossen ist, während der zweite Stromunterbrecher (106) offen ist;
- in der zweiten Stellung der erste Stromunterbrecher (105) geschlossen ist und der zweite Stromunterbrecher (106) geschlossen ist;
- in der dritten Stellung ist der erste Stromunterbrecher (105) offen ist, während der zweite Stromunterbrecher (106) geschlossen ist; und
- wobei das Umschalten zwischen der ersten und der dritten Stellung über die zweite Stellung erfolgt.

16. Haartrockner gemäß Anspruch 11, wobei die elektrischen Heizmittel (181, 182) mit einem zweiten zweipoligen Schalter (120) verbunden sind, der drei Stellungen aufweist, die geeignet sind, die elektrischen Heizmittel (181, 182) nacheinander zu betreiben und die geeignet sind, somit eine erste Einstellung, in der der Luftstrom nicht erwärmt wird, eine zweite Einstellung, in welcher der Luftstrom nur durch eines der elektrischen Heizmittel (181, 182) erwärmt wird, und eine dritte Einstellung zu erfassen, in welcher der Luftstrom durch zwei der elektrischen Heizmittel (181, 182) erwärmt wird.

17. Haartrockner gemäß Anspruch 15, wobei der zweite zweipolige Schalter (120) einen ersten und einen zweiten Stromunterbrecher (125, 156) aufweist, die gleichzeitig schalten, und er in einer ersten, einer zweiten und einer dritten Einstellung eingerichtet sein kann, in denen jeweils
- in der ersten Stellung der erste Stromunterbrecher (125) offen ist und der zweite Stromunterbrecher (126) geschlossen ist;
- in der zweiten Stellung der erste Stromunterbrecher (125) geschlossen ist und der zweite Stromunterbrecher (106) offen ist;
- in der dritten Stellung der erste Stromunterbrecher (125) geschlossen ist, während der zweite Stromunterbrecher (106) geschlossen ist;
- wobei das Umschalten zwischen der ersten und dritten Stellung zwangsläufig über die zweite Stellung erfolgt.

## Revendications

1. Sèche-cheveux (1) comprenant un corps doté d'au moins un élément supérieur et d'une partie de préhension adaptée pour être saisie par un utilisateur et reliée opérationnellement audit au moins un élément supérieur (2) ; ledit élément supérieur (2) s'étendant le long d'un axe (X-X) et ayant, à une de ses extrémités, une entrée d'air (4) et, à l'extrémité opposée, une sortie d'air (5) ; ledit élément supérieur (2) comprenant, à l'intérieur de lui :
- un moteur électrique (6) ;
- un ventilateur, actionné par ledit moteur électrique (6) pour produire un flux d'air passant à travers l'élément supérieur (2) et sortant par l'ouverture avant ;
- des moyens de chauffage électrique (8, 181, 182) pour chauffer le flux d'air produit par le ventilateur ; lesdits moyens de chauffage électrique (8, 181, 182) étant agencés à une distance prédéterminée dudit moteur électrique (6) et du ventilateur ;
- un premier circuit imprimé de commande électronique (7) permettant au moteur électrique (6) et audit ventilateur d'être entraînés ;
- au moins un écran d'isolation thermique (9) intercalé entre ledit premier circuit imprimé de commande électronique (7) et lesdits moyens de chauffage électrique (8, 181, 182) pour protéger ledit circuit imprimé de commande électronique (7) contre la chaleur envoyée par lesdits moyens de chauffage électrique (8, 181, 182) ;
- ledit circuit imprimé de commande électronique (7), lesdits moyens de chauffage électrique (8, 181, 182) et ledit écran d'isolation thermique (9) étant alignés par rapport à l'axe d'extension (X-X).

2. Sèche-cheveux (1) selon la revendication 1, **caractérisé en ce que** ledit écran d'isolation thermique (9) s'étend de sorte à couvrir au moins 70 % de la surface du premier circuit imprimé de commande électronique (7).

3. Sèche-cheveux (1) selon la revendication 2, **caractérisé en ce que** ledit moteur électrique (6) est un moteur sans balais.

4. Sèche-cheveux (1) selon la revendication 1, **caractérisé en ce que** ledit moteur électrique (6) et ledit ventilateur sont alignés par rapport à l'axe d'extension (X-X).

5. Sèche-cheveux (1) selon la revendication 1, **caractérisé en ce que** ledit écran d'isolation thermique (9) comprend une partie de forme sensiblement parabolique (11) s'étendant radialement autour de l'axe d'extension (X-X) dudit élément supérieur (2).

6. Sèche-cheveux (1) selon la revendication 1, **caractérisé en ce que** ledit écran d'isolation thermique (9) comprend des moyens de fixation pour une fixation amovible audit moteur électrique (6).

7. Sèche-cheveux (1) selon la revendication 1, **caractérisé en ce que** ledit écran d'isolation thermique (9) comprend une partie annulaire (12) concentrique par rapport audit axe d'extension (X-X) afin d'envelopper au moins partiellement les composants électroniques dudit premier circuit imprimé de commande électronique (7).

8. Sèche-cheveux (1) selon la revendication 1, **caractérisé en ce que** ledit écran d'isolation thermique (9) est composé d'un matériau thermoplastique à base de polyamide.

9. Sèche-cheveux (1) selon la revendication 1, **caractérisé en ce que** ledit écran d'isolation thermique (9) est composé d'un matériau thermoplastique à base de polyamide renforcé avec des charges de verre.

10. Sèche-cheveux (1) selon la revendication 1, **caractérisé en ce que** ledit écran d'isolation thermique (9) comprend une partie conique (13) dans la direction dudit ventilateur afin de diriger le flux d'air radialement vers l'extérieur.

11. Sèche-cheveux (1) selon l'une quelconque des revendications précédentes 1 à 10, comprenant un second circuit imprimé qui permet auxdits moyens de chauffage électrique (8, 181, 182) d'être commandés.

12. Sèche-cheveux (1) selon l'une quelconque des revendications précédentes 1 à 11, dans lequel l'alimentation dudit moteur électrique (6) est séparée de l'alimentation desdits moyens de chauffage électrique (181, 182).

13. Sèche-cheveux selon la revendication 10, dans lequel le second circuit imprimé électronique comprend un premier commutateur bipolaire (100) comprenant deux interrupteurs (105, 106), dans lequel un premier interrupteur (105) a une entrée (101) alimentée par le bloc d'alimentation (140) du secteur et une sortie (103) fournissant une première entrée d'alimentation (110) dudit moteur électrique (6), et dans lequel ledit commutateur bipolaire (100) comprend toujours une configuration dans laquelle au moins l'un desdits interrupteurs (105, 106) est fermé.

14. Sèche-cheveux (1) selon la revendication 13, dans lequel ledit premier commutateur bipolaire (100) comprend un second interrupteur (106) ayant une entrée (102) et une sortie (104) connectées respectivement à une première et une second borne de commande (113, 114) dudit moteur électrique (6).

15. Sèche-cheveux selon la revendication 13 ou 14, dans lequel ledit premier commutateur bipolaire (100) peut être configuré dans une première ou deuxième ou troisième position dans lequel, respectivement :
- dans ladite première position, ledit premier interrupteur (105) est fermé tandis que le second interrupteur (106) est ouvert ;
- dans ladite deuxième position, ledit premier interrupteur (105) est fermé et le second interrupteur (106) est fermé ;
- dans ladite troisième position, ledit premier interrupteur (105) est ouvert tandis que le second interrupteur (106) est fermé ; et
- dans lequel la commutation entre ladite première et troisième position se produit en passant par ladite deuxième position.

16. Sèche-cheveux selon la revendication 11, dans lequel lesdits moyens de chauffage électrique (181, 182) sont connectés à un second commutateur bipolaire (120) ayant trois positions, conçues pour actionner les moyens de chauffage électrique (181, 182) en séquence et par conséquent à détecter une première configuration dans laquelle ledit flux d'air n'est pas chauffé, une seconde configuration dans laquelle ledit flux d'air n'est chauffé que par un seul desdits moyens de chauffage électrique (181, 182) et une troisième configuration dans laquelle ledit flux d'air est chauffé par deux desdits moyens de chauffage électrique (181, 182).

17. Sèche-cheveux selon la revendication 15, dans lequel ledit second commutateur bipolaire (120) a un premier et un second interrupteur (125, 156) qui commutent simultanément, et il peut être configuré dans une première, une deuxième et une troisième configuration dans laquelle, respectivement :
- dans ladite première position, ledit premier interrupteur (125) est ouvert et le second interrupteur (126) est fermé ;
- dans ladite deuxième position, ledit premier interrupteur (125) est fermé et le second interrupteur (106) est ouvert ;
- dans ladite troisième position, ledit premier interrupteur (125) est fermé alors que le second interrupteur (106) est fermé ;
dans lequel la commutation entre ladite première et troisième position se produit obligatoirement en passant par ladite deuxième position.
